# EUROPEAN PATENT APPLICATION

(11) **EP 4 456 260 A1**
(43) Date of publication of application: **30.10.2024**
(21) Application number: 22911246.1
(22) Date of filing: 20.12.2022
(51) Int. Cl.: H01M 10/6555, F16L 59/02, H01M 10/617, H01M 10/625, H01M 10/651, H01M 10/658

(54) **HEAT TRANSFER SUPPRESSION SHEET AND BATTERY PACK**

(30) Priority: 23.12.2021 JP 2021209896
(71) Applicant: IBIDEN CO., LTD., Ogaki-shi, Gifu 503-8604 (JP)
(72) Inventor: JIMBO Naoyuki, Ibi-gun, Gifu 501-0695 (JP); SHIMADA Shohei, Ibi-gun, Gifu 501-0695 (JP)
(74) Representative: Hoffmann Eitle
(86) International application number: PCT/JP2022/046979
(87) International publication number: WO 2023/120544

(57) **Abstract**

In the present invention, uniform heat insulation and heat dissipation are obtained, and if thermal runaway occurs in a battery cell, heat is blocked between adjacent battery cells, and the heat generated by the battery cells is quickly dissipated. A heat transfer suppression sheet (10) includes: uniformly dispersed inorganic particles (21); first inorganic fibers (23) that are uniformly dispersed and oriented in one direction parallel to the main surfaces (10a, 10b) of the sheet; and second inorganic fibers (24) that intertwine with the first inorganic fibers (23) to form a (3)-dimensional web structure.

## Description

### TECHNICAL FIELD

The present invention relates to a battery pack to be a power source for an electric motor that drives, for example, an electric vehicle or a hybrid vehicle, and a heat transfer suppression sheet for use in a battery pack.

### BACKGROUND ART

In the related art, in order to suppress heat transfer from a heating element to other objects, a heat transfer suppression sheet that is placed close to the heating element or at least partially in contact with the heating element has been used.

In recent years, demand has increased for a lithium ion secondary battery, which has higher capacity and is capable of higher output than a lead-acid battery, a nickel-metal hydride battery, or the like, and the lithium ion secondary battery is used not only in small-capacity secondary batteries for mobile phones, computers, and small electronic devices, but also in large-capacity secondary batteries for automobiles, backup power sources, or the like. Particularly in the field of automobiles, from the viewpoint of environmental protection, an electric vehicle or a hybrid vehicle driven by an electric motor has been actively developed. The electric vehicle or the hybrid vehicle is equipped with a battery pack in which a plurality of battery cells are connected in series or in parallel to serve as a power source for a driving electric motor.

However, in the lithium ion secondary battery, heat may be generated due to a chemical reaction during charging and discharging, which may cause battery malfunctions. For example, when a certain battery cell suddenly rises in temperature and causes thermal runaway, the heat is propagated to other adjacent battery cells, which may cause thermal runaway in the other battery cells.

In the field of the battery pack as described above, in order to suppress the propagation of heat from a battery cell that has experienced thermal runaway to adj acent battery cells, and to prevent problems such as battery fire and explosion due to a chain reaction of the thermal runaway, various heat transfer suppression sheets to be interposed between battery cells have been proposed.

For example, Patent Literature 1 describes a heat transfer suppression sheet including a composite layer containing a fiber and silica aerogel and a resin strut disposed in a thickness direction in the composite layer. According to such a heat transfer suppression sheet, a compressive stress applied to the sheet can be dispersed by the resin strut, and a heat insulation property can be retained. When the heat transfer suppression sheet is used between battery cells, the compressive stress applied to the silica aerogel in the sheet can be dispersed by the resin strut, and the heat insulation property between the battery cells can be maintained for a long period of time. It is disclosed that, as a result, the fire caused by thermal runaway between battery cells can be suppressed, a safe on-vehicle battery can be provided, and further, when the resin strut having a heat insulation property is made of a porous resin, heat conduction from the battery cells can be suppressed.

### CITATION LIST

### PATENT LITERATURE

Patent Literature 1: JP2017-215014A

### SUMMARY OF INVENTION

### TECHNICAL PROBLEM

However, since the above heat transfer suppression sheet has a high heat insulation property, when it comes into close contact with a battery cell, heat may accumulate, causing thermal runaway of the battery cell.

Further, in the above heat transfer suppression sheet, the heat insulation property is different between the resin strut in which no aerogel is present and the composite layer in which the aerogel is present, so that it is difficult to achieve a uniform heat insulation property and heat dissipation property within the sheet. Therefore, the transfer of the heat generated from the battery cells is also different, and when thermal runaway occurs, the heat transfer suppression sheet may not be able to suppress the heat transfer.

The present invention has been made in view of the above problems, and an object thereof is to provide a heat transfer suppression sheet that has a uniform heat insulation property and heat dissipation property and that, when a battery cell experiences thermal runaway, can block heat between adjacent battery cells and quickly dissipate heat generated by the battery cell, and a battery pack including a heat transfer suppression sheet interposed between battery cells.

### SOLUTION TO PROBLEM

The above object of the present invention is achieved by the following configuration [1] relating to a heat transfer suppression sheet.
[1] A heat transfer suppression sheet containing:
   an inorganic particle uniformly dispersed;
   a first inorganic fiber uniformly dispersed and oriented in one direction parallel to a main surface of the sheet; and
   a second inorganic fiber intertwined with the first inorganic fiber to form a three-dimensional web structure.

   Preferred embodiments of the present invention relating to the heat transfer suppression sheet relate to the following [2] to [13].
[2] The heat transfer suppression sheet according to [1], in which the first inorganic fiber has an average fiber diameter larger than an average fiber diameter of the second inorganic fiber.
[3] The heat transfer suppression sheet according to [1] or [2], in which the first inorganic fiber has an average fiber length larger than an average fiber length of the second inorganic fiber.
[4] The heat transfer suppression sheet according to any one of [1] to [3], in which the first inorganic fiber has a degree of crimp smaller than a degree of crimp of the second inorganic fiber.
[5] The heat transfer suppression sheet according to any one of [1] to [4], in which the first inorganic fiber is linear or acicular, and the second inorganic fiber is dendritic or curly.
[6] The heat transfer suppression sheet according to any one of [1] to [5], in which
   the first inorganic fiber is an amorphous fiber, and
   the second inorganic fiber is composed of at least one selected from a crystalline fiber and an amorphous fiber having a glass transition point higher than a glass transition point of the first inorganic fiber.
[7] The heat transfer suppression sheet according to any one of [1] to [6], in which the second inorganic fiber has a heat conductivity of 41 [W/m·K] or less.
[8] The heat transfer suppression sheet according to any one of [1] to [7], in which the first inorganic fiber is a fiber composed of at least one kind selected from a glass fiber, glass wool, slag wool, rock wool, an alkaline earth silicate fiber, and a refractory ceramic fiber.
[9] The heat transfer suppression sheet according to any one of [1] to [8], in which the second inorganic fiber is a fiber composed of at least one kind selected from an alumina fiber, a mullite fiber, an alumina silicate fiber, a natural mineral-based fiber, and a zirconia fiber.
[10] The heat transfer suppression sheet according to any one of [1] to [9], in which the inorganic particle is a particle composed of at least one kind selected from silica particle, titania particle, zirconia particle, zircon particle, barium titanate particle, zinc oxide particle, and alumina particle.
[11] The heat transfer suppression sheet according to any one of [1] to [10], in which a content of the inorganic particle is 30 mass% or more and 80 mass% or less with respect to a total mass of the heat transfer suppression sheet.
[12] The heat transfer suppression sheet according to any one of [1] to [11], in which the inorganic particle has an average secondary particle diameter of 1 nm or more and 100 nm or less.
[13] The heat transfer suppression sheet according to any one of [1] to [12], in which a total content of the first inorganic fiber and the second inorganic fiber is 5 mass% or more and 30 mass% or less with respect to the total mass of the heat transfer suppression sheet.
   The above object of the present invention is also achieved by the following configuration [14] relating to a battery pack.
[14] A battery pack including:
   a plurality of battery cells connected in series or in parallel; and
   the heat transfer suppression sheet according to any one of [1] to [13].

### ADVANTAGEOUS EFFECTS OF INVENTION

According to the present invention, since the first inorganic fiber is dispersed and oriented in one direction parallel to the main surface inside the heat transfer suppression sheet, the heat insulation property and the heat dissipation property within the sheet are excellent and uniform, and the heat generated from the battery cell can be effectively dissipated. Therefore, even when a battery cell experiences thermal runaway, heat to adjacent battery cells can be blocked and a chain reaction can be prevented. In addition, the first inorganic fiber and the second inorganic fiber are intertwined to form a three-dimensional web structure, the second inorganic fiber functions as a heat transfer path connecting the first inorganic fiber and the first inorganic fiber to further improve a heat transfer property, and the three-dimensional web structure provides excellent strength.

In the battery pack according to the present invention, the above heat transfer suppression sheet is used. Therefore, the battery pack according to the present invention maintains a stable operation, and even when the battery cell experiences thermal runaway, damages can be suppressed to the minimum.

### BRIEF DESCRIPTION OF DRAWINGS

[Fig. 1] Fig. 1 is a schematic diagram showing a configuration of a heat transfer suppression sheet according to an embodiment of the present invention.
[Fig. 2] Fig. 2 is a cross-sectional view schematically showing a battery pack according to the present embodiment.

### DESCRIPTION OF EMBODIMENTS

As a result of intensive research to provide a heat transfer suppression sheet having an excellent heat insulation property and heat dissipation property which, when a battery cell experiences thermal runaway, blocks heat between adj acent battery cells and quickly dissipates heat generated by the battery cell, the inventors of the present application have found that orientation of the inorganic fiber contained in the sheet is important. Then, the oriented first inorganic fiber easily conducts heat, and the heat insulation property and the heat dissipation property within the sheet are excellent and uniform, and the heat generated from the battery cell can be effectively dissipated. In addition, it has been found that when the first inorganic fiber and the second inorganic fiber are intertwined to form a three-dimensional web structure, the second inorganic fiber functions as a heat transfer path connecting the first inorganic fibers that are oriented to further improve the heat transfer property, and further the three-dimensional web structure provides excellent strength. The present invention is based on such findings.

Hereinafter, a heat transfer suppression sheet and a battery pack according to an embodiment of the present invention will be described in detail with reference to the drawings. Note that the present invention is not limited to the embodiments described below, and can be freely changed and implemented without departing from the gist of the present invention.

### [1. Heat Transfer Suppression Sheet]

The heat transfer suppression sheet according to the present invention contains:
(1) an inorganic particle uniformly dispersed;
(2) a first inorganic fiber uniformly dispersed and oriented in one direction parallel to a main surface of the sheet; and
(3) a second inorganic fiber intertwined with the first inorganic fiber to form a three-dimensional web structure.

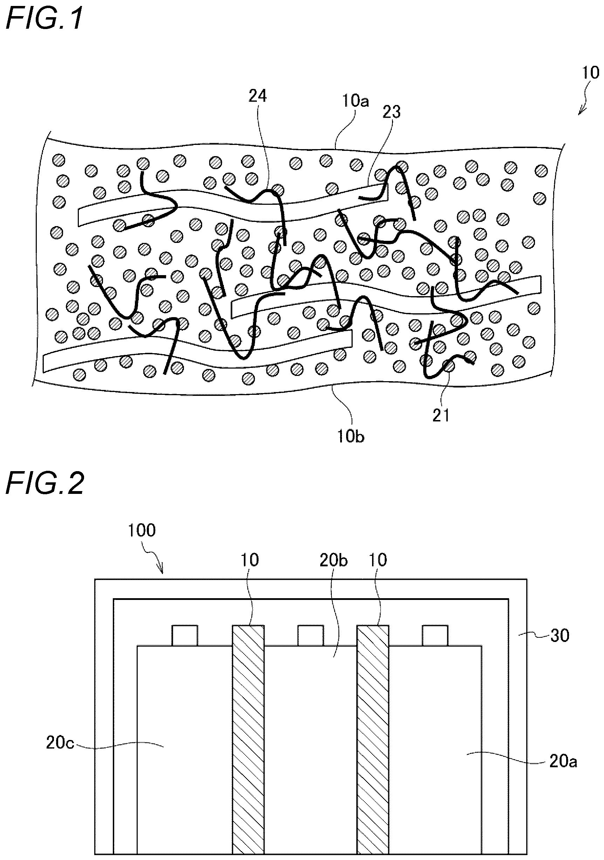

Fig. 1 is a schematic diagram showing a configuration of a heat transfer suppression sheet 10 according to an embodiment of the present invention. As shown in Fig. 1, the first inorganic fiber 23 is oriented in a layered manner in one direction parallel to main surfaces 10a, 10b of the heat transfer suppression sheet 10. In addition, the first inorganic fiber 23 is intertwined with second inorganic fiber 24 to form a three-dimensional web structure. At the same time, the inorganic particle 21 is uniformly spread and retained in a space between the first inorganic fiber 23 and the second inorganic fiber 24. The inorganic particle 21, the first inorganic fiber 23, and the second inorganic fiber 24 are all heat-resistant materials, countless minute spaces are formed between the particles, between the particle and the fiber, and between the fibers, and the air also exhibits a heat insulation effect, so that a heat transfer suppression performance is excellent.

Note that, in the present invention, "oriented in one direction" does not necessarily mean that all the first inorganic fibers 23 are oriented in that direction, and it is sufficient that the first inorganic fibers 23 have a strong tendency to line up in one specific direction. It can be determined by visual confirmation that the first inorganic fibers 23 is oriented in a specific direction. When it is difficult to distinguish between fibers, it can be confirmed by measuring the bending strength in the direction and confirming that the bending strength is 20% or more larger than in other directions.

### (First Inorganic Fiber)

The first inorganic fiber 23 is an amorphous fiber, and the second inorganic fiber 24 is a fiber composed of at least one kind selected from an amorphous fiber having a glass transition point higher than that of the first inorganic fiber 23 and a crystalline fiber. Note that, the melting point of the crystalline inorganic fiber is commonly higher than the glass transition point of the amorphous inorganic fiber. Therefore, when the first inorganic fiber 23 is exposed to a high temperature, the surface thereof softens before the second inorganic fiber 24 and binds the inorganic particle 21 and the second inorganic fiber 24. Therefore, the mechanical strength of the heat transfer suppression sheet 10 can be improved.

As the first inorganic fiber 23, a glass fiber, glass wool, slag wool, rock wool, an alkaline earth silicate fiber, and a refractory ceramic fiber can be suitably used. These may be used alone or in combination in plural kinds thereof. Among them, an inorganic fiber having a melting point of lower than 700°C is preferred, and many amorphous inorganic fibers can be used. In particular, a fiber containing SiO₂ is preferred, and a glass fiber is more preferred because of being inexpensive, easily available, and having excellent handling properties.

### (Second Inorganic Fiber)

As described above, the second inorganic fiber 24 is a fiber composed of at least one kind selected from an amorphous fiber having a glass transition point higher than that of the first inorganic fiber 23 and a crystalline fiber. As the second inorganic fiber 24, many crystalline inorganic fibers can be used.

When the second inorganic fiber 24 is composed of a crystalline fiber or one having a glass transition point higher than that of the first inorganic fiber 23, even when the first inorganic fiber 23 softens when exposed to a high temperature, the second inorganic fiber 24 does not melt or soften. Therefore, even during thermal runaway of battery cells, it can maintain the shape and continue to be present between the battery cells. In addition, when the second inorganic fiber 24 does not melt or soften, minute spaces are maintained between the inorganic particle 21 and the inorganic particle 21, between the inorganic particle 21 and the first inorganic fiber 23 and the second inorganic fiber 24, between the first inorganic fiber 23 and the second inorganic fiber 24. Therefore, the heat insulation effect due to air can be exhibited and an excellent heat transfer suppression performance can be retained.

When the second inorganic fiber 24 is crystalline, an alumina fiber, a mullite fiber, an alumina silicate fiber, a natural mineral-based fiber such as wollastonite as mineral-based fibers other than those listed above, and a zirconia fiber can be suitably used as the second inorganic fiber 24. These may be used alone or in combination in plural kinds thereof. Among them, one having a melting point of higher than 1000°C can be suitably used since, even when the battery cell experiences thermal runaway, the second inorganic fiber does not melt or soften and can maintain the shape.

In addition, even when the second inorganic fiber 24 is amorphous, any fiber having a glass transition point higher than that of the first inorganic fiber 23 can be used. For example, a glass fiber having a glass transition point higher than that of the first inorganic fiber 23 may be used as the second inorganic fiber 24.

Note that, as described above, the first inorganic fiber 23 has a glass transition point lower than that of the second inorganic fiber 24, and when exposed to a high temperature, the first inorganic fiber 23 softens first. Therefore, the first inorganic fiber 23 can bind the inorganic particle 21 and the second inorganic fiber 24. However, for example, in the case where the second inorganic fiber 24 is amorphous and has a fiber diameter smaller than the fiber diameter of the first inorganic fiber 23, when the glass transition points of the first inorganic fiber 23 and the second inorganic fiber 24 are close to each other, the second inorganic fiber 24 may soften first. Therefore, when the second inorganic fiber 24 is an amorphous fiber, the glass transition point of the second inorganic fiber 24 is preferably 100°C or more, and more preferably 300°C or more, higher than the glass transition point of the first inorganic fiber 23.

### (Average Fiber Diameters and Average Fiber Lengths of First Inorganic Fiber and Second Inorganic Fiber)

In the present invention, an inorganic fiber having a large average fiber diameter (large diameter) has an effect of improving the mechanical strength and the shape retention property of the heat transfer suppression sheet 10. When one of the first inorganic fiber 23 and the second inorganic fiber 24 has a large diameter, the above effect can be obtained. Since external impacts may act on the heat transfer suppression sheet 10, the containing of a large-diameter inorganic fiber improves the impact resistance. External impacts include, for example, a pressing force due to expansion of battery cells, or a wind pressure due to ignition of battery cells.

In addition, in order to improve the mechanical strength and the shape retention property, it is particularly preferable that the large-diameter inorganic fiber is linear or acicular. Note that a linear or acicular fiber refers to a fiber having a degree of crimp, which will be described later, of, for example, less than 10%, and preferably 5% or less.

More specifically, in order to improve the mechanical strength and the shape retention property of the heat transfer suppression sheet 10, the average fiber diameter of the large-diameter inorganic fiber is preferably 1 µm or more, and more preferably 3 µm or more. However, when the large-diameter inorganic fiber is too thick, the moldability and the processability into the heat transfer suppression sheet 10 may decrease. Therefore, the average fiber diameter is preferably 20 µm or less, and more preferably 15 µm or less. In addition, the fiber length of the large-diameter inorganic fiber is preferably 100 mm or less since when it is too long, the moldability and the processability may decrease. Further, when the large-diameter inorganic fiber is too short, the shape retention property and the mechanical strength decrease. Therefore, the fiber length thereof is preferably 0.1 mm or more.

On the other hand, an inorganic fiber having a small average fiber diameter (small diameter) has an effect of improving the retention property for the inorganic particle 21, and increasing the flexibility of the heat transfer suppression sheet 10. Therefore, when the other one of the first inorganic fiber 23 and the second inorganic fiber 24 has a small diameter, the above effect can be obtained.

More specifically, in order to improve the retention property for the inorganic particle 21, it is preferable that a small-diameter inorganic fiber is easily deformable and has flexibility. Therefore, the average fiber diameter of the small-diameter inorganic fiber is preferably less than 1 µm, and more preferably 0.1 µm or less. However, when the small-diameter inorganic fiber is too thin, the small-diameter inorganic fiber is easily broken, and the ability to retain the inorganic particle 21 decreases. In addition, a large proportion of fibers remain entangled in the sheet without retaining the inorganic particle 21, and in addition to a decrease in ability to retain the inorganic particle 21, the moldability and the shape retention property also become poor. Therefore, the average fiber diameter of the small-diameter inorganic fiber is preferably 1 nm or more, and more preferably 10 nm or more.

Note that the fiber length of the small-diameter inorganic fiber is preferably 0.1 mm or less since when it is too long, the moldability and the shape retention property decrease. Further, when the small-diameter inorganic fiber is too short, the shape retention property and the mechanical strength decrease. Therefore, the fiber length thereof is preferably 1 µm or more.

In addition, the small-diameter inorganic fiber is preferably dendritic or curly. Having such a shape, the small-diameter inorganic fiber is entangled with the large-diameter inorganic fiber and the inorganic particle 21. Therefore, the ability to retain the inorganic particle 21 is improved. In addition, when the heat transfer suppression sheet 10 is subjected to a pressing force or a wind pressure, the small-diameter inorganic fiber is suppressed from slipping and moving, thereby improving the mechanical strength, particularly against an external pressing force or impact.

Note that dendritic refers to a two-dimensionally or three-dimensionally branched structure, for example, feather-like, tetrapod-like, radial, or three-dimensional mesh-like.

When the small-diameter inorganic fiber is dendritic, the average fiber diameter can be obtained by measuring the diameters of a trunk and branches at several points using an SEM and calculating the average value thereof.

In addition, curly refers to a structure in which the fiber is bent in various directions. As one method of quantifying the curly form, it is known to calculate the degree of crimp from an electron micrograph, which can be calculated according to the following equation, for example.

### Degree of crimp (%) = (fiber length - distance between fiber ends)/(fiber length) × 100

Here, both the fiber length and the distance between fiber ends are measured values on an electron micrograph. That is, the fiber length and the distance between fiber ends are values obtained by projection onto a two-dimensional plane, and are shorter than actual values. Based on this equation, the degree of crimp of the small-diameter inorganic fiber is preferably 10% or more, and more preferably 30% or more. When the degree of crimp is small, the ability to retain the inorganic particle 21 decreases, and entanglement (network) between the large-diameter inorganic fibers and with the large-diameter inorganic fiber is difficult to form.

As described above, it is preferable that the average fiber diameter of either the first inorganic fiber 23 or the second inorganic fiber 24 is larger than the average fiber diameter of the other one. In the present invention, it is more preferable that the average fiber diameter of the first inorganic fiber 23 is larger than the average fiber diameter of the second inorganic fiber 24. When the first inorganic fiber 23 has a large average fiber diameter, the first inorganic fiber 23 has a low glass transition point and softens early, and thus becomes film-like and hardens as the temperature rises. On the other hand, when the second inorganic fiber 24 has a small average fiber diameter, even when the temperature rises, the small-diameter second inorganic fiber 24 remains in the form of fiber, so that the structure of the heat transfer suppression sheet 10 can be retained and powder falling can be prevented.

Note that, it is most preferable that both a large-diameter linear or acicular inorganic fiber and a small-diameter dendritic or curly inorganic fiber are used as the first inorganic fiber 23, and both a large-diameter linear or acicular inorganic fiber and a small-diameter dendritic or curly inorganic fiber are used as the second inorganic fiber 24, since the retention effect for the inorganic particle 21, the mechanical strength, and the shape retention property can be further improved.

In addition, when the average fiber length of the first inorganic fiber 23 is larger than that of the second inorganic fiber 24, the orientation length is increased, so that the heat dissipation property is further improved. Further, the second inorganic fiber 24 is dendritic or curly, can thus be easily intertwined with the first inorganic fiber, and is effective for a heat transfer path and shape retention.

### (Heat Conductivities of First Inorganic Fiber and Second Inorganic Fiber)

It is preferable that the heat transfer suppression sheet 10 has an excellent heat insulation performance, and it is preferable that both the first inorganic fiber 23 and the second inorganic fiber 24 have a small heat conductivity. However, it is preferable that the second inorganic fiber 24 has a heat conductivity larger than that of the first inorganic fiber 23 since it serves as a heat transfer path connecting the first inorganic fibers oriented in a layered manner. Therefore, in consideration of the heat insulation performance, the heat conductivity of the second inorganic fiber 24 is preferably 41 [W/m·K] or less.

### (Inorganic particle)

The kind of the inorganic particle 21 is not particularly limited, and an oxide particle, a carbide particle, a nitride particle, and an inorganic hydrate particle can be used. Among them, an oxide particle is preferred. In addition, the form and the size of the inorganic particle 21 are also not particularly limited, and the inorganic particle 21 preferably includes at least one kind selected from a nanoparticle, a hollow particle, and a porous particle, and more preferably includes a nanoparticle.

The inorganic particle 21 may be used alone or in combination of two or more kinds thereof. When two or more kinds of inorganic particles 21 having different heat transfer suppression effects are combined, a heating element can be cooled in multiple stages and a heat absorption effect can be exhibited over a wider temperature range. It is also preferable to use a large-diameter particle and a small-diameter particle in combination as the inorganic particle 21. When the small-diameter inorganic particle enters a gap between the large-diameter inorganic particles, a more dense structure is formed, and the heat transfer suppression effect can be improved.

When an average secondary particle diameter of the inorganic particle 21 is 0.01 µm or more, the inorganic particle 21 is easily available and an increase in production cost can be suppressed. When the average secondary particle diameter is 200 µm or less, a desired heat insulation effect can be obtained. Therefore, the average secondary particle diameter of the inorganic particle 21 is preferably 0.01 µm or more and 200 µm or less, and more preferably 0.05 µm or more and 100 µm or less.

Hereinafter, the inorganic particle 21 will be described in detail.

### (Oxide particle)

An oxide particle preferred as the inorganic particle 21 has a high refractive index and has a high effect of diffusely reflecting light, so that when the oxide particle is used as the inorganic particle 21, radiant heat transfer can be suppressed, particularly in a high temperature range with abnormal heat generation or the like. Specifically, silica particle, titania particle, zirconia particle, zircon particle, barium titanate particle, zinc oxide particle, and alumina particle are preferred. Particularly, silica particle is a component having a high heat insulation property, and titania particle is a component having a high refractive index compared to other metal oxides, and has a high effect of diffusely reflecting light and blocking radiant heat in a high temperature range of 500°C or higher. Therefore, silica particle and titania particle are most preferably used as the oxide particle.

### (Average primary particle diameter of oxide particle: 0.001 µm or more and 50 µm or less)

Since the particle diameter of the oxide particle may influence an effect of reflecting radiant heat, when an average primary particle diameter thereof is limited to a predetermined range, an even higher heat insulation property can be obtained.

That is, when the average primary particle diameter of the oxide particle is 0.001 µm or more, a wavelength thereof is sufficiently larger than a wavelength of light that contributes to heating, and it diffusely reflects the light efficiently. Therefore, in a high temperature range of 500°C or higher, the radiant heat transfer of heat within the sheet can be suppressed, and the heat insulation property can be further improved. On the other hand, when the average primary particle diameter of the oxide particle is 50 µm or less, even with compression, the number of contact points between the particles does not increase, and it is difficult to form a conductive heat transfer path. Therefore, the influence on the heat insulation property particularly in a normal temperature range where the conductive heat transfer is dominant can be reduced.

In the case of using two or more kinds of oxide particles, it is also preferable to use a large-diameter particle and a small-diameter particle (nanoparticle) in combination. In this case, the average primary particle diameter of the large-diameter particle is more preferably 1 µm or more and 50 µm or less, still more preferably 5 µm or more and 30 µm or less, and most preferably 10 µm or less. Note that in the present invention, the average primary particle diameter can be determined by observing particles with a microscope, comparing the particles with a standard scale, and taking an average of any 10 particles.

### (Nanoparticle)

In the present invention, the nanoparticle refers to a nanometer-order particle having a spherical or nearly spherical shape and having an average primary particle diameter of less than 1 µm. The nanoparticle has a low density and thus suppress the conductive heat transfer, and when the nanoparticle is used as the inorganic particle, voids are further finely dispersed, so that an excellent heat insulation property of suppressing the convective heat transfer can be obtained. Therefore, it is preferable to use the nanoparticle since they can suppress the conduction of heat between adjacent nanoparticles during normal use of a battery in a normal temperature range.

In the present invention, at least one kind of the oxide particle, the carbide particle, the nitride particle, and the inorganic hydrate particle selected as the inorganic particle 21 is preferably nanoparticle. Further, when the nanoparticle having a small average primary particle diameter is used as the oxide particle, even when the heat transfer suppression sheet 10 is compressed by expansion due to thermal runaway of the battery cell and the internal density increases, an increase in conductive heat transfer of the heat transfer suppression sheet 10 can be suppressed. This is thought to be because the nanoparticle tends to form fine voids between particles due to a repulsive force caused by static electricity, the bulk density thereof is low, and it is filled with the particles so as to provide a cushioning property.

Note that in the present invention, when the nanoparticle is used as the inorganic particle 21, the kind thereof is not particularly limited as long as the above definition of nanoparticle is met. For example, since silica nanoparticle is a material having a high heat insulation property and have a few contact points between particles, the amount of heat conducted by the silica nanoparticle is smaller than that in a case of using silica particle having a large particle diameter. In addition, since generally available silica nanoparticle has a bulk density of about 0.1 g/cm³, for example, even when battery cells disposed on both sides of the heat transfer suppression sheet 10 thermally expand and a large compressive stress is applied to the heat transfer suppression sheet 10, the size (area) or the number of contact points between the silica nanoparticle does not increase remarkably, and the heat insulation property can be maintained. Therefore, it is preferable to use silica nanoparticle as the nanoparticle. As the silica nanoparticle, wet silica, dry silica, aerogel, or the like can be used.

As described above, titania has a high effect of blocking the radiant heat, and silica nanoparticle have extremely low conductive heat transfer, and even when a large compressive stress is applied to the heat transfer suppression sheet 10, an excellent heat insulation property can be maintained. Therefore, most preferably, both titania particle and silica nanoparticle are used as the inorganic particle 21.

### (Average primary particle diameter of nanoparticle: 1 nm or more and 100 nm or less)

When the average primary particle diameter of the nanoparticle is limited to a predetermined range, an even higher heat insulation property can be obtained.

That is, when the average primary particle diameter of the nanoparticle is 1 nm or more and 100 nm or less, the convective heat transfer and the conductive heat transfer of the heat within the heat transfer suppression sheet 10 can be suppressed particularly in a temperature range of lower than 500°C, and the heat insulation property can be further improved. In addition, even when a compressive stress is applied, voids remaining between the nanoparticles and contact points between many particles can suppress the conductive heat transfer, and the heat insulation property of the heat transfer suppression sheet 10 can be maintained. Note that the average primary particle diameter of the nanoparticle is more preferably 2 nm or more, and still more preferably 3 nm or more. On the other hand, the average primary particle diameter of the nanoparticle is more preferably 50 nm or less, and still more preferably 10 nm or less.

### (Inorganic hydrate particle)

An inorganic hydrate particle is also preferred as the inorganic particle 21, and the inorganic hydrate particle exhibits a so-called "heat absorption effect" that the inorganic hydrate particle receives heat from the heating element, thermally decomposes when reaching a thermal decomposition start temperature or higher, releases crystal water thereof, and lowers the temperature of the heating element and surroundings. The inorganic hydrate particle forms a porous material after releasing the crystal water, and exhibits a heat insulation effect due to countless air pores thereof.

Specific examples of the inorganic hydrate include aluminum hydroxide (Al(OH)₃), magnesium hydroxide (Mg(OH)₂), calcium hydroxide (Ca(OH)₂), zinc hydroxide (Zn(OH)₂), iron hydroxide (Fe(OH)₂), manganese hydroxide (Mn(OH)₂), zirconium hydroxide (Zr(OH)₂), and gallium hydroxide (Ga(OH)₃).

For example, aluminum hydroxide has about 35% crystal water, and as shown in the following formula, thermally decomposes to release the crystal water and exhibits a heat absorption effect. Then, after releasing the crystal water, aluminum hydroxide forms alumina (Al₂O₃), which is a porous material, and functions as a heat insulation material.

2A1(OH)₃ → Al₂O₃ + 3H₂O

Note that, as will be described later, a battery pack according to the present invention includes the heat transfer suppression sheet 10 interposed between battery cells, and in a battery cell that has experienced thermal runaway, the temperature rapidly rises to over 200°C and continues to rise to about 700°C. Therefore, it is preferable that the inorganic particle is composed of an inorganic hydrate whose thermal decomposition start temperature is 200°C or higher.

The thermal decomposition start temperature of the above inorganic hydrates is about 200°C for aluminum hydroxide, is about 330°C for magnesium hydroxide, is about 580°C for calcium hydroxide, is about 200°C for zinc hydroxide, is about 350°C for iron hydroxide, is about 300°C for manganese hydroxide, is about 300°C for zirconium hydroxide, and is about 300°C for gallium hydroxide. All of these almost overlap the temperature range of the rapid temperature rise of a battery cell that has experienced thermal runaway, and can effectively prevent the temperature rise. Therefore, these are preferred inorganic hydrates.

In the case where the inorganic hydrate particle is used as the inorganic particle 21, when the average particle diameter thereof is too large, it takes a certain amount of time for the inorganic hydrate near the center of the heat transfer suppression sheet 10 to reach the thermal decomposition temperature thereof, so that the inorganic hydrate particle near the center of the sheet may not be completely thermally decomposed. Therefore, the average secondary particle diameter of the inorganic hydrate particle is preferably 0.01 µm or more and 200 µm or less, and more preferably 0.05 µm or more and 100 µm or less.

### (Contents of Inorganic particle, First Inorganic Fiber, and Second Inorganic Fiber)

The content of the inorganic particle 21 is preferably 30 mass% or more and 80 mass% or less with respect to the total mass of the heat transfer suppression sheet 10. The content of the inorganic particle 21 is more preferably 40 mass% or more and 70 mass% or less, and 50 mass% or more and 60 mass% or less.

In addition, the total content of the first inorganic fiber 23 and the second inorganic fiber 24 is preferably 5 mass% or more and 30 mass% or less with respect to the total mass of the heat transfer suppression sheet 10. The total content of the first inorganic fiber 23 and the second inorganic fiber 24 is more preferably 10 mass% or more and 25 mass% or less, and 15 mass% or more and 20 mass% or less.

With such contents, the heat absorption and heat insulation effect of the inorganic particle 21, the shape retention property, the pressing force resistance, and the wind pressure resistance of the first inorganic fiber 23, and the heat transfer path effect and the ability to retain the inorganic particle 21 of the second inorganic fiber 24 are exhibited in a well-balanced manner.

### (Other Blending Materials)

The heat transfer suppression sheet 10 may contain other blending materials that have been conventionally incorporated into the heat transfer suppression sheet 10, if necessary. For example, an organic fiber, an organic binder, or the like can be blended. All of these are useful for reinforcing the heat transfer suppression sheet 10 and improving the moldability, and the total amount thereof is preferably 10 mass% or less with respect to the total mass of the heat transfer suppression sheet 10.

### (Thickness of Heat Transfer Suppression Sheet)

In the present embodiment, the thickness of the heat transfer suppression sheet 10 is not particularly limited, and is preferably in a range of 0.05 mm to 6 mm. When the thickness of the heat transfer suppression sheet 10 is 0.05 mm or more, sufficient mechanical strength can be imparted to the heat transfer suppression sheet 10. On the other hand, when the thickness of the heat transfer suppression sheet 10 is 6 mm or less, good assemblability can be obtained.

### (Heat Insulation Performance of Heat Transfer Suppression Sheet)

The heat conductivity can be mentioned as an indicator indicating the heat insulation performance. In the present embodiment, the heat conductivity is preferably less than 1 (W/m·K), more preferably less than 0.5 (W/m·K), and still more preferably less than 0.2 (W/m·K). Further, the heat conductivity is even more preferably less than 0.1 (W/m·K), even still more preferably less than 0.05 (W/m·K), and particularly preferably less than 0.02 (W/m·K). Note that the heat conductivity can be measured in accordance with "Testing method for heat conductivity of refractories" described in JIS R 2251.

### [2. Method for Producing Heat Transfer Suppression Sheet]

First, the inorganic particle 21, the first inorganic fiber 23, and other blending materials are added to water at a predetermined ratio and kneaded using a kneader, to prepare a paste. Thereafter, the obtained paste is extruded from a slit-shaped nozzle using an extrusion molding machine to obtain a first member. This first member is a sheet-like wet material, in which the first inorganic fiber 23 is oriented in one direction and the inorganic particle 21 is retained between the fibers.

In addition, the inorganic particle 21, the second inorganic fiber 24, and other blending materials are dry mixed at a predetermined ratio and press-molded to obtain a second member. This second member has a sheet shape, in which the second inorganic fiber 24 is randomly present and the inorganic particle 21 is retained between the fibers.

Then, a plurality of first members and second members is laminated alternately, and the whole is press-molded and dried, to obtain the heat transfer suppression sheet 10. During press molding, the second inorganic fiber 24 randomly present in the second member enters the first member in a wet state and is entangled with the first inorganic fiber 23. Then, by drying, such a state is maintained and the heat transfer suppression sheet 10 is obtained.

### [3. Battery Pack]

As shown in Fig. 2, a battery pack 100 according to the present embodiment includes a plurality of battery cells 20a, 20b, and 20c arranged in parallel, connected in series or in parallel, and stored in a battery case 30, and the above heat transfer suppression sheet 10 is interposed between the battery cells 20a, 20b, and 20c.

In such a battery pack 100, since the heat transfer suppression sheet 10 is interposed between the battery cells 20a, 20b, and 20c, the propagation of heat between the battery cells 20a, 20b, and 20c can be suppressed during normal use.

On the other hand, even when any of the battery cells 20a, 20b, and 20c experiences thermal runaway, the presence of the heat transfer suppression sheet 10 according to the present embodiment makes it possible to suppress the propagation of heat between the battery cells 20a, 20b, and 20c. Therefore, the chain reaction of the thermal runaway can be inhibited, and an adverse influence on other battery cells can be minimized.

Although not shown, in addition to being interposed between the battery cells 20a, 20b, and 20c, the heat transfer suppression sheet 10 may be attached directly to an inner bottom surface of the battery case 30, or may be disposed in a space between a ceiling surface or a side wall of the battery case 30 and the battery cells 20a, 20b, and 20c. Therefore, high versatility can be obtained, the effect of preventing a chain reaction of the thermal runaway caused by heat propagation between adjacent battery cells can be obtained, and when a certain battery cell ignites, it is also possible to suppress the flame from spreading to the outside of the battery case.

Further, the heat transfer suppression sheet can be easily bent, depending on selection of the components and the thickness thereof. Therefore, it is not influenced by the shape of the battery cell, and can be adapted to any shape. Specifically, it can be applied to cylindrical batteries, flat batteries, and the like, in addition to prismatic batteries.

For example, the battery pack according to the present embodiment is used in an electric vehicle (EV) or the like, and is sometimes disposed under a passenger's floor. In this case, even when the battery cell ignites, the safety of the passenger can be ensured. In this case, since the heat transfer suppression sheet interposed between the battery cells can also be disposed between the battery cell and the battery case, it is not necessary to newly prepare a flame retardant material or the like, and a safe battery pack can be easily formed at a low cost.

Although various embodiments have been described above, it is needless to say that the present invention is not limited to such examples. It is apparent to those skilled in the art that various changes and modifications can be conceived within the scope of the claims, and it is understood that such changes and modifications are also encompassed within the technical scope of the present invention. In addition, the constituent elements in the above embodiments may be freely combined without departing from the gist of the present invention.

Note that the present application is based on a Japanese patent application (Japanese Patent Application No. 2021-209896) filed on December 23, 2021, and the contents thereof are incorporated herein by reference.

### REFERENCE SIGNS LIST

10 heat transfer suppression sheet
10a, 10b main surface
20, 20b, 20c battery cell
21 inorganic particle
23 first inorganic fiber
24 second inorganic fiber
30 battery case
100 battery pack

## Claims

1. A heat transfer suppression sheet comprising:
an inorganic particle uniformly dispersed;
a first inorganic fiber uniformly dispersed and oriented in one direction parallel to a main surface of the sheet; and
a second inorganic fiber intertwined with the first inorganic fiber to form a three-dimensional web structure.

2. The heat transfer suppression sheet according to claim 1, wherein the first inorganic fiber has an average fiber diameter larger than an average fiber diameter of the second inorganic fiber.

3. The heat transfer suppression sheet according to claim 1 or 2, wherein the first inorganic fiber has an average fiber length larger than an average fiber length of the second inorganic fiber.

4. The heat transfer suppression sheet according to any one of claims 1 to 3, wherein the first inorganic fiber has a degree of crimp smaller than a degree of crimp of the second inorganic fiber.

5. The heat transfer suppression sheet according to any one of claims 1 to 4, wherein the first inorganic fiber is linear or acicular, and the second inorganic fiber is dendritic or curly.

6. The heat transfer suppression sheet according to any one of claims 1 to 5, wherein
the first inorganic fiber is an amorphous fiber, and
the second inorganic fiber is composed of at least one kind selected from an amorphous fiber having a glass transition point higher than a glass transition point of the first inorganic fiber and a crystalline fiber.

7. The heat transfer suppression sheet according to any one of claims 1 to 6, wherein the second inorganic fiber has a heat conductivity of 41 [W/m·K] or less.

8. The heat transfer suppression sheet according to any one of claims 1 to 7, wherein the first inorganic fiber is a fiber composed of at least one kind selected from a glass fiber, glass wool, slag wool, rock wool, an alkaline earth silicate fiber, and a refractory ceramic fiber.

9. The heat transfer suppression sheet according to any one of claims 1 to 8, wherein the second inorganic fiber is a fiber composed of at least one kind selected from an alumina fiber, a mullite fiber, an alumina silicate fiber, a natural mineral-based fiber, and a zirconia fiber.

10. The heat transfer suppression sheet according to any one of claims 1 to 9, wherein the inorganic particle is a particle composed of at least one kind selected from silica particle, titania particle, zirconia particle, zircon particle, barium titanate particle, zinc oxide particle, and alumina particle.

11. The heat transfer suppression sheet according to any one of claims 1 to 10, wherein a content of the inorganic particle is 30 mass% or more and 80 mass% or less with respect to a total mass of the heat transfer suppression sheet.

12. The heat transfer suppression sheet according to any one of claims 1 to 11, wherein the inorganic particle has an average secondary particle diameter of 1 nm or more and 100 nm or less.

13. The heat transfer suppression sheet according to any one of claims 1 to 12, wherein a total content of the first inorganic fiber and the second inorganic fiber is 5 mass% or more and 30 mass% or less with respect to the total mass of the heat transfer suppression sheet.

14. A battery pack comprising:
a plurality of battery cells connected in series or in parallel; and
the heat transfer suppression sheet according to any one of claims 1 to 13.
